# FASCICULE DE BREVET EUROPEEN

(11) **EP 0 829 292 B1**
(45) Date de publication et mention de la délivrance du brevet: **23.07.2003**
(21) Numéro de dépôt: 97402103.2
(22) Date de dépôt: 10.09.1997
(51) Int. Cl.: B01D 15/00, C01B 23/00, F25J 3/08

(54) **Epuration d'un fluide inerte à l'état liquide en ses impuretés H2 et/ou CO**
Entfernung von H2 und/oder CO Verunreinigungen aus einem inerten, flüssigen Fluidum
Removal of H2 and/or CO impurities from an inert fluidum in liquid state

(30) Priorité: 16.09.1996 FR 9611271
(43) Date de publication de la demande: 18.03.1998
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Gary, Daniel, 78180 Montigny-Le-Bretonneux (FR)
(74) Mandataire: Pittis, Olivier

(56) Documents cités:
- EP-A- 0 646 543
- EP-A- 0 662 595
- DE-A- 4 017 410
- FR-A- 2 668 140
- US-A- 4 746 332
- DATABASE WPI Week 9429 Derwent Publications Ltd., London, GB; AN 94-240329 XP002031875 & SU 1 813 523 A (APPLIED CHEM SCI PRODN ASSOC)

## Description

La présente invention concerne un procédé et un dispositif d'épuration d'un fluide inerte à l'état liquide en l'une au moins de ses impuretés hydrogène (H₂) et monoxyde de carbone (CO).

Les gaz inertes, tels l'azote et les gaz rares, à savoir l'hélium, le néon, l'argon, le krypton, le xénon et leurs mélanges, sont couramment mis en oeuvre dans de nombreuses industries, en particulier l'industrie électronique. Cette dernière tout particulièrement, requiert lesdits gaz inertes aussi purs que possible et, débarrassés de leurs impuretés, notamment hydrogène et monoxyde de carbone.

Ces gaz inertes sont habituellement produits par distillation cryogénique, après liquéfaction.

Or, les fluides inertes liquéfiés, ainsi obtenus, contiennent généralement des impuretés de type hydrogène (H₂) et monoxyde de carbone (CO), en des proportions généralement supérieures à quelques centaines de ppb (partie par milliard en volume), voire à quelques ppm (partie par million en volume), qu'il est nécessaire d'éliminer.

Un certain nombre de procédés d'épuration de fluides inertes sont connus de l'art antérieur, mais ceux-ci présentent généralement plusieurs inconvénients ou désavantages, à savoir:
- soit ils ne sont pas adaptés à une épuration des fluides inertes à l'état liquide,
- soit ils ne permettent pas une épuration des impuretés H₂ et/ou CO contenues dans le fluide inerte à épurer,
- soit ils requièrent une vaporisation du fluide inerte préalablement à son épuration. Or, on comprendra aisément que lorsqu'on souhaite obtenir un fluide inerte à l'état liquide substantiellement épuré en ses impuretés H₂ et/ou CO, le fait de devoir, successivement vaporiser le fluide inerte à épurer, épurer ledit gaz inerte, puis reliquéfier le gaz inerte épuré obtenu, représente un inconvénient économique important, notamment en ce qui concerne les coûts énergétiques et les matériels à mettre en oeuvre.

Ainsi, le brevet US-A-3,996,082 décrit un procédé de purification de l'argon gazeux en son impureté oxygène, par passage de cet argon au travers d'une zéolite synthétique du type A.

Le brevet US-A-2,874,030 décrit, quant à lui, un procédé de purification de l'argon gazeux en son impureté oxygène, dans lequel l'oxygène est transformé en eau par réaction catalytique avec un excès d'hydrogène; l'eau formée étant ensuite éliminée à l'aide d'un moyen de déshydratation.

La demande de brevet EP-A-0 350 656 décrit, quant à elle, un procédé de purification d'un gaz inerte en ses impuretés oxygène, monoxyde de carbone et hydrogène, dans lequel le monoxyde de carbone (CO) et l'hydrogène (H₂) présents dans le gaz inerte sont éliminés par oxydation catalytique à une température comprise entre 150 et 250°C en présence d'un premier catalyseur à base de cuivre réduit puis d'un deuxième catalyseur à base de cuivre oxydé, en donnant du dioxyde de carbone CO₂ et de l'eau H₂O; ces derniers étant ensuite éliminés par adsorption à température ambiante sur un adsorbant de type tamis moléculaire.

Le document FR-A- 2668 140 enseigne un procédé d'élaboration d'azote ultra-pur, dans lequel CO et H₂ sont catalysés en CO₂ et H₂O avant d'étre éliminés sur des particules métalliques.

Ainsi, aucun de ces procédés existants n'est adapté à l'épuration des fluides inertes à l'état liquide en leurs impuretés hydrogène (H₂) et/ou monoxyde de carbone (CO), c'est-à-dire de fluides inertes liquéfiés à température cryogénique (inférieure à leur point de bulle).

Le document EP-A-662 595 propose, en outre un procède de purification d'azote lipuide, dans lequel les impuretés the H₂ , CO et O₂ sont adsorbées sur un adsorbant de type zéolite échangée ou non-échangée, ou oxyde métallique poreux en particulier une hopcalite.

Il est donc nécessaire de développer de nouveaux procédés permettant d'épurer les fluides inertes à l'état liquide en leurs impuretés H₂ et/ou CO.

La présente invention a donc pour but de proposer un procédé permettant d'obtenir un fluide inerte à l'état liquide, tel l'azote ou les gaz rares, substantiellement épuré en l'une au moins de ses impuretés. hydrogène et/ou monoxyde de carbone:
- qui soit aisé à mettre en oeuvre du point de vue industriel et de coût raisonnable,
- permettant d'obtenir un fluide inerte à l'état liquide de très haute pureté, c'est-à-dire contenant au maximum environ 1 ppb ± 1 d'hydrogène et/ou de monoxyde de carbone,
- pouvant être mis en oeuvre aux températures cryogéniques des fluides inertes à l'état liquide, à savoir à des températures généralement inférieures à - 180°C,
- mettant en oeuvre des adsorbants peu onéreux et/ou facilement accessibles,
- ne nécessitant pas une vaporisation préalable à l'épuration du fluide liquide à épurer, puis une reliquéfaction ultérieure du fluide épuré.

L'invention consiste alors en un procédé d'épuration d'un fluide inerte à l'état liquide contenant l'une au moins des impuretés hydrogène (H₂) et monoxyde de carbone (CO), en l'une au moins desdites impuretés dans lequel:
a) on fait passer le fluide à l'état liquide à épurer au travers d'au moins un lit de particules d'au moins un adsorbant afin d'adsorber au moins une des dites impuretés H₂ et CO contenues dans le fluide inerte à l'état liquide, l'adsorption étant effectuée sur un fluide à l'état liquide porté à une température inférieure ou égale à son point d'ébullition; et
b) on récupère ledit fluide inerte à l'état liquide substantiellement épuré en l'une au moins desdites impuretés H₂ et CO,
caractérisé en ce que lesdites particules sont constituées d'au moins un métal -supporté sur au moins un support, le métal étant choisi dans le groupe formé par le platine (Pt), le palladium (Pd), le rhodium (Rh) et l'iridium (Ir) et le support étant choisi dans le groupe formé par l'alumine, la silice, les zéolites et le dioxyde de titane (TiO₂).

Selon un mode préféré de l'invention, les particules d'adsorbant sont des particules de palladium (Pd) supportées sur un support de type alumine.

Avantageusement, les particules d'adsorbant comprennent de 0,5 à 5% en poids de palladium (Pd), de préférence de l'ordre de 2%.

Les particules d'adsorbants selon l'invention ont, de préférence, une forme comprise dans le groupe formé par les bâtonnets, les granulés ou les billes.

De préférence, le fluide à l'état liquide à épurer est choisi dans le groupe formé par l'azote liquide, l'argon liquide et l'hélium liquide.

Dans certains cas, il est également nécessaire ou souhaitable d'épurer ledit fluide inerte à l'état liquide en son impureté oxygène. Dans ce cas, selon un autre mode de réalisation, le procédé selon l'invention comprend une étape subsidiaire de passage du fluide inerte à l'état liquide au travers d'au moins un lit de particules d'au moins un second adsorbant afin d'adsorber l'impureté oxygène O₂. Cette étape subsidiaire d'adsorption sur au moins un lit de particules d'au moins un second adsorbant de l'oxygène précède et/ou suit l'étape a).

En d'autres termes, l'élimination de l'impureté oxygène du fluide inerte à l'état liquide pourra être réalisée au choix, avant élimination des impuretés H₂ et/ou CO, et/ou après celle-ci.

Selon un premier mode de réalisation, les particules de second adsorbant adsorbent sélectivement l'impureté oxygène (O₂).

Selon un second mode de réalisation, les particules de second adsorbant adsorbent l'impureté oxygène (O₂) et au moins l'une des impuretés CO et H₂.

De préférence, les particules de second adsorbant sont des particules choisies dans le groupe formé par les oxydes métalliques poreux, telle l'hopcalite.

La présente invention concerne également un dispositif d'épuration d'un fluide inerte à l'état liquide, contenant l'une au moins des impuretés H₂ et CO, en l'une au moins desdites impuretés, caractérisé en ce qu'il comprend une source de fluide inerte à l'état liquide à épurer et au moins un réacteur contenant au moins un lit de particules d'au moins un adsorbant afin d'adsorber au moins l'une des impuretés H₂ et CO, ladite source étant connectée à au moins un réacteur.

De préférence, ledit au moins un réacteur comprend, en outre, au moins un lit de particules d'au moins un adsorbant afin d'adsorber au moins l'impureté O₂.

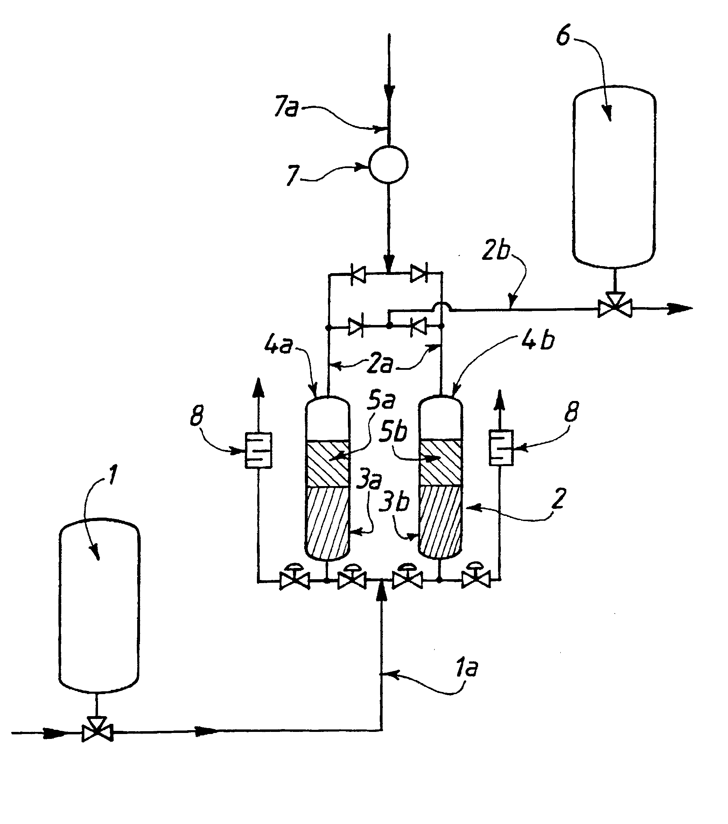

Un dispositif conforme à l'invention va maintenant être décrit, plus en détail, en référence à la figure annexée.

La figure unique annexée représente un dispositif selon l'invention, comprenant une source d'un fluide inerte à l'état liquide, ici de l'azote liquide, à épurer en l'une au moins de ses impuretés H₂ et CO, consistant en une cuve de stockage 1 contenant de l'azote liquide. Ladite source d'azote liquide 1 étant reliée via une conduite la à une zone d'adsorption 2 comprenant au moins un réacteur et avantageusement, ainsi que représenté ici, deux réacteurs 4a, 4b contenant chacun un lit 3a, 3b d'un premier adsorbant afin d'adsorber subsidiairement l'oxygène contenu dans l'azote liquide et un lit 5a, 5b d'un second adsorbant, placé en aval du premier lit 3a, 3b, afin d'adsorber au moins l'une des impuretés H₂ et CO.

Le fait de prévoir un lit amont d'un adsorbant, telle l'hopcalite, capable d'éliminer subsidiairement l'impureté O₂ (et une partie du CO), contenue dans l'azote liquide, permet de préserver le lit d'adsorbant (Pd/Al₂O₃) destiné à éliminer les impuretés H₂ et/ou CO, en évitant une saturation trop rapide de celui-ci, et, par là même, de diminuer le nombre de phases de régénération pendant une phase de temps donnée.

Après épuration, l'azote liquide épuré en ses impuretés H₂, CO et/ou O₂ est acheminé via une conduite 2a, 2b jusqu'à son lieu d'utilisation (non représenté) ou vers un lieu de stockage 6 d'azote liquide épuré.

Ainsi que représenté sur la figure, on utilise, de préférence, deux réacteurs 4a, 4b contenant chacun un adsorbant, tel le palladium supporté sur un support alumine, afin d'éliminer par adsorption les impuretés H₂ et CO de l'azote liquide, et un autre adsorbant, tel un adsorbant de type hopcalite, placé en amont du premier, afin d'éliminer subsidiairement l'impureté 02 contenue dans l'azote liquide et éventuellement une partie du CO. Le fait d'utiliser deux réacteurs permet de faire travailler ceux-ci de façon alternative, c'est-à-dire que pendant que l'un des réacteurs travaille en épuration, l'autre peut être régénéré.

La régénération est effectuée de façon classique par exemple, en suivant le protocole suivant:
- réchauffage progressif de l'adsorbeur à l'aide d'azote gazeux chaud, c'est-à-dire à une température d'environ 200°C, et à la pression atmosphérique;
- introduction dans le réacteur d'un mélange réducteur, tel un mélange H₂/N₂ à 2%, porté à une température de 200°C (étape subsidiaire: uniquement si présence d'un double lit du type: hopcalite-Pd/Al₂O₃);
- balayage du réacteur à l'aide d'azote gazeux chaud afin de permettre l'élimination de toute trace d'hydrogène H₂ résiduel (étape subsidiaire: uniquement si présence d'un double lit du type: hopcalite-Pd/Al₂O₃);
- balayage du réacteur à l'aide d'azote gazeux à température ambiante afin de refroidir l'adsorbeur et de le préparer au prochain cycle d'épuration.

Le circuit de régénération, non représenté de façon détaillée, comprend notamment une conduite 7a d'amenée du gaz de régénération et un réchauffeur 7; les réacteurs 4a et 4b peuvent être reliés à l'atmosphère par le biais de mises à l'air 8, éventuellement munies de silencieux.

Sur la figure, la source d'azote liquide à épurer a été représentée sous forme d'une cuve de stockage 1.

Toutefois, cette représentation est nullement limitative de l'invention, étant donné que l'on entend par source de fluide inerte à l'état liquide, tout moyen permettant d'alimenter le ou les réacteurs en ledit fluide à l'état liquide à épurer, tel un camion, une conduite d'alimentation, une capacité tampon, ou une colonne de distillation cryogénique.

L'efficacité du procédé selon l'invention va maintenant être démontrée à l'aide d'exemples illustratifs, mais non limitatifs de l'invention.

Dans les exemples ci-après, le fluide inerte à l'état liquide à épurer en l'une au moins de ses impuretés H₂ et CO, et constitué d'azote liquide et l'adsorbant utilisé est de type palladium supporté sur un support de type alumine (Pd/Al₂O₃).

Les quantités d'impuretés monoxyde de carbone CO et hydrogène H₂ sont mesurées au moyen d'un chromatographe RGA3 commercialisé par la société TRACE ANALYTICAL, le seuil de détection de cet analyseur étant de l'ordre de 1 ppb ± 1 (partie par milliard en volume) pour le monoxyde de carbone et 5 ppb ± 1 pour l'hydrogène.

### EXEMPLE 1:

Afin de démontrer l'efficacité du procédé de l'invention, de l'azote liquide contenant approximativement 0,75 ppm d'hydrogène et 0,65 ppm de monoxyde de carbone a été épuré au travers d'un adsorbant de type palladium supporté sur un support de type alumine.

Le dispositif utilisé à cette fin est analogue à celui décrit ci-dessus.

Deux essais successifs ont été réalisés et sont consignés dans le tableau I suivant:

Les conditions opératoires de l'essai 1 et de l'essai 2 sont identiques, à l'exception de la quantité de palladium imprégné sur le support de type alumine. Ainsi, l'essai 1 a été réalisé avec un adsorbant comprenant quatre fois plus de palladium que l'adsorbant mis en oeuvre dans l'essai 2.

L'épuration a été effectuée à une pression d'environ 8 bars absolus (8.10⁵Pa) sur de l'azote liquide sous refroidi à une température de l'ordre de - 187°C, via une source de froid extérieure (la température de bulle de l'azote est d'environ - 172,6°C).

Le débit d'épuration est d'environ 32 Nm³/h et le temps de contact, c'est-à-dire le temps que met une molécule à traverser le lit d'adsorbant, est d'environ deux minutes.

Les résultats obtenus ont été consignés dans le tableau I suivant:

**TABLEAU I**

| ESSAI | ADSORBANT Pd/alumine (% poids) | TENEUR A L'ENTREE | | TENEUR A LA SORTIE | | DUREE (heures) | |
|---|---|---|---|---|---|---|---|
| | | H2 | CO | H2 | CO | H2 | CO |
| 1 | 2% | 0,75 ppm | 0,65 ppm | N. D. | N. D. | 13 | 13,5 |
| | | 0,75 ppm | 0,65 ppm | 10 ppb | 10 ppb | 13,5 | 18 |
| | | 0,75 ppm | 0,65 ppm | 100 ppb | 100 ppb | 14,5 | 22 |
| 2 | 0,5% | 0,75 ppm | 0,65 ppm | N. D. | N. D. | 3,2 | 3,5 |
| | | 0,75 ppm | 0,65 ppm | 10 | 10 | 3,5 | 4,5 |
| | | 0,75 ppm | 0,65 ppm | 100 | NM | 3,75 | NM |
| N. D. : non détecté (≤ 1 ppb ± 1 en CO; ≤ 5 ppb ± 1 en H₂), ppm : parties par million en volume, ppb : parties par milliard en volume, NM : non mesuré. | | | | | | | |

Les résultats consignés dans le tableau I précédent permettent de mettre en évidence que:
- un adsorbant de type palladium supporté sur un support alumine permet d'épurer l'azote liquide en ses impuretés H₂ et CO à un seuil inférieur au ppb (partie par milliard en volume);
- la capacité d'adsorption de l'adsorbant de type palladium supporté sur un support alumine est proportionnelle à la quantité de métal noble (palladium imprégné sur ledit support). En effet, l'adsorbant de l'essai 1 (2% Pd/Al₂O₃), contenant quatre fois la teneur en palladium de l'adsorbant de l'essai 2 (0,5% Pd/Al₂O₃), permet d'obtenir une épuration de l'azote liquide en ses impuretés H₂ et CO constante et inférieure au ppb pendant environ 13 heures, alors que l'adsorbant de l'essai 2 n'a permis une épuration efficace de l'azote liquide en ses impuretés H₂ et CO que pendant le quart de cette durée, c'est-à-dire un peu plus de 3 heures;
- plus la teneur en métal noble supporté est élevée, plus l'épuration sera efficace et constante dans le temps. En pratique, c'est-à-dire du point de vue industriel, la teneur en métal noble supporté à utiliser dépendra du volume de dimensionnement de l'adsorbeur (en effet, il est nécessaire de respecter une hauteur d'adsorbant minimale afin de permettre un temps de contact cohérent entre le flux d'azote et l'adsorbant), de la quantité d'impuretés à éliminer contenus dans l'azote liquide et du volume d'azote liquide que l'on souhaite épurer avant de procéder à une étape de régénération. Ainsi, on préférera généralement une teneur de l'ordre de 2% de palladium à une teneur de 0,5%; par contre, une teneur de 4% ne s'imposera pas forcément;
- il est nécessaire de régénérer l'adsorbant après quelques heures d'épuration (par exemple dans notre essai après environ 13 heures dans le cas d'un adsorbant de type 2% Pd/Al₂O₃). En effet, après quelques heures d'épuration, on assiste à une saturation progressive de l'adsorbant, lequel doit être régénéré pour éviter un perçage des impuretés.

Le procédé d'épuration d'un fluide inerte à l'état liquide selon l'invention est tout à fait satisfaisant puisqu'il permet d'obtenir une épuration dudit gaz inerte à l'état liquide en ses impuretés H₂ et/ou CO au seuil du ppb.

### EXEMPLE 2:

Comme nous l'avons vu précédemment, l'efficacité d'adsorption dépend de l'adsorbant utilisé et, en particulier, de la teneur de métal supporté sur le support.

Les essais 1 et 2 consignés dans l'exemple 1 précédent, ont été réalisés à l'aide d'un adsorbant de type palladium supporté sur un support de type alumine; les caractéristiques des adsorbants mis en oeuvre dans les essais 1 et 2 sont consignés dans le tableau II ci-après.

**TABLEAU II**

| ADSORBANT | 2% Pd/Al₂O₃ | 0,5 % Pd/Al₂O₃ |
|---|---|---|
| Diamètres des Billes (mm) | 1,5 | 3,0 |
| B E T (m²/g) | 110 | 230 |
| Masse Volumique (g/l) | 600 | 720 |

Bien que les essais 1 et 2 aient été réalisés uniquement au moyen de billes d'alumine supportant du palladium, d'autres types de support, de métaux, et/ou de formes d'adsorbants entrent également dans le cadre de la présente invention.

Ainsi, d'autres métaux nobles également utilisables sont le platine, le rhodium et l'iridium.

De même si le support de type alumine est préféré, d'autres types de support peuvent être également mis en oeuvre dans le cadre de la présente invention, par exemple les supports de type silice, zéolite ou oxyde de titane (TiO₂).

L'adsorbant peut être mis en forme de billes, de granulés ou de bâtonnets.

Bien que la présente invention concerne les fluides inertes à l'état liquide, le procédé décrit ici peut également servir à épurer des gaz inertes très froids, c'est-à-dire à une température dans la gamme - 130°C à - 170°C. Toutefois, les tests effectués sur divers gaz inertes très froids n'ont montré qu'une épuration partielle et donc peu satisfaisante, c'est-à-dire ne permettant pas d'atteindre le seuil du ppb et avec percée des impuretés H₂ et CO quasi-immédiate.

Ces derniers tests effectués sur divers gaz inertes confirment, par ailleurs, que les procédés connus d'épuration des gaz inertes ne sont pas applicables, de façon évidente, à l'épuration des fluides inertes à l'état liquide, et inversement.

## Revendications

1. Procédé d'épuration d'un fluide inerte à l'état liquide, contenant l'une au moins des impuretés hydrogène (H₂) et monoxyde de carbone (CO), en l'une au moins desdites impuretés, dans lequel :
a) on fait passer le fluide à l'état liquide à épurer au travers d'au moins un lit de particules d'au moins un adsorbant afin d'adsorber l'une au moins desdites impuretés H₂ et CO, l'adsorption étant effectuée sur un fluide liquide porté à une température inférieure ou égale à sa température d'ébullition;
b) on récupère un fluide à l'état liquide substantiellement épuré en l'une au moins desdites impuretés H₂ et CO,
**caractérisé en ce que** les particules d'adsorbants sont constituées d'au moins un métal supporté sur au moins un support, le métal étant choisi dans le groupe formé par le platine (Pt), le palladium (Pd), le rhodium (Rh) et l'iridium (Ir), et le support étant choisi dans le groupe formé par l'alumine, la silice, les zéolites ou le dioxyde de titane (TiO₂).

2. Procédé selon la revendication 1, **caractérisé en ce que** les particules d'adsorbant sont constituées de palladium supporté sur un support de type alumine.

3. Procédé selon la revendication 2, **caractérisé en ce que** les particules d'adsorbant ont une teneur de 0,5 à 10% en poids de palladium, de préférence une teneur comprise entre 1 et 5%.

4. Procédé selon l'une des revendications 1 à 3, **caractérisé en ce que** les particules d'adsorbant ont une forme de bâtonnets, de granulés ou de billes.

5. Procédé selon l'une des revendications 1 à 4, **caractérisé en ce que** le fluide inerte à l'état liquide à épurer en l'une au moins de ses impuretés H₂ et CO est choisi dans le groupe formé par l'azote liquide, l'argon liquide et l'hélium liquide.

6. Procédé selon l'une des revendications 1 à 5, **caractérisé en ce qu'**il comprend une étape de passage du fluide inerte à l'état liquide au travers d'au moins un lit de particules d'au moins un second adsorbant afin d'adsorber au moins l'impureté oxygène (O₂) contenue dans ledit gaz inerte à l'état liquide.

7. Procédé selon la revendication 6, **caractérisé en ce que** l'étape d'adsorption de l'impureté oxygène sur le second adsorbant précède et/ou suit l'étape a) d'adsorption de l'une au moins des impuretés H₂ et CO.

8. Procédé selon l'une des revendications 6 ou 7, **caractérisé en ce que** les particules de second adsorbant adsorbent sélectivement l'impureté O₂ contenue dans le fluide inerte à l'état liquide à épurer.

9. Procédé selon l'une des revendications 7 ou 8 **caractérisé en ce que** les particules de second adsorbant adsorbent l'impureté O₂ et au moins l'une des impuretés CO et H₂.

10. Procédé selon la revendication 9, **caractérisé en ce que** le second adsorbant est choisi dans le groupe formé par les oxydes métalliques poreux.

11. Procédé selon la revendication 10, **caractérisé en ce que** le second adsorbant est de type hopcalite.

## Patentansprüche

1. Verfahren zur Befreiung eines in flüssigem Zustand vorliegenden inerten Fluids, das mindestens eine der Verunreinigungen Wasserstoff (H₂) und Kohlenmonoxid (CO) enthält, von mindestens einer dieser Verunreinigungen, bei dem man:
a) das zu reinigende, in flüssigem Zustand vorliegende inerte Fluid zur Adsorption mindestens einer der Verunreinigungen H₂ und CO über mindestens eine Schüttung von Teilchen aus mindestens einem Adsorptionsmittel leitet, wobei die Adsorption an einem flüssigen Fluid bei einer Temperatur kleiner gleich dem Siedepunkt des Fluids vorgenommen wird;
b) ein in flüssigem Zustand vorliegendes, von mindestens einer der Verunreinigungen H₂ und CO weitgehend befreites Fluid zurückgewinnt,
**dadurch gekennzeichnet, daß** die Adsorptionsmittelteilchen aus mindestens einem auf mindestens einem Träger geträgerten Metall bestehen, wobei das Metall aus der Gruppe bestehend aus Platin (Pt), Palladium (Pd), Rhodium (Rh) und Iridium (Ir) stammt und der Träger aus der Gruppe bestehend aus Aluminiumoxid, Siliciumoxid, Zeolithen und Titandioxid (TiO₂) stammt.

2. Verfahren nach Anspruch 1, **dadurch gekennzeichnet, daß** die Adsorptionsmittelteilchen aus auf einem Aluminiumoxidträger geträgertem Palladium bestehen.

3. Verfahren nach Anspruch 2, **dadurch gekennzeichnet, daß** die Adsorptionsmittelteilchen einen Palladiumgehalt von 0,5 bis 10 Gew.-% und vorzugsweise zwischen 1 und 5% aufweisen.

4. Verfahren nach einem der Ansprüche 1 bis 3, **dadurch gekennzeichnet, daß** die Adsorptionsmittelteilchen in Form von Stäbchen, Granulat oder Kügelchen vorliegen.

5. Verfahren nach einem der Ansprüche 1 bis 4, **dadurch gekennzeichnet, daß** man das von mindestens einer der darin enthaltenen Verunreinigungen H₂ und CO zu befreiende, in flüssiger Form vorliegende inerte Fluid aus der Gruppe bestehend aus flüssigem Stickstoff, flüssigem Argon und flüssigem Helium auswählt.

6. Verfahren nach einem der Ansprüche 1 bis 5, **dadurch gekennzeichnet, daß** man das in flüssigem Zustand vorliegende inerte Fluid zur Adsorption mindestens der in dem in flüssigem Zustand vorliegenden inerten Fluid enthaltenen Verunreinigung Sauerstoff (O₂) über mindestens eine Schüttung von Teilchen aus mindestens einem zweiten Adsorptionsmittel leitet.

7. Verfahren nach Anspruch 6, **dadurch gekennzeichnet, daß** man den Schritt der Adsorption der Verunreinigung Sauerstoff an dem zweiten Adsorptionsmittel vor oder nach dem Schritt a) der Adsorption mindestens einer der Verunreinigungen H₂ und CO durchführt.

8. Verfahren nach Anspruch 6 oder 7, **dadurch gekennzeichnet, daß** die Teilchen aus dem zweiten Adsorptionsmittel die in dem zu reinigenden, in flüssigem Zustand vorliegenden inerten Fluid enthaltenen Verunreinigung O₂ selektiv adsorbieren.

9. Verfahren nach Anspruch 7 oder 8, **dadurch gekennzeichnet, daß** die Teilchen aus dem zweiten Adsorptionsmittel die Verunreinigung O₂ und mindestens eine der Verunreinigungen CO und H₂ adsorbieren.

10. Verfahren nach Anspruch 9, **dadurch gekennzeichnet, daß** man das zweite Adsorptionsmittel aus der Gruppe bestehend aus porösen Metalloxiden auswählt.

11. Verfahren nach Anspruch 10, **dadurch gekennzeichnet, daß** das zweite Adsorptionsmittel vom Hopcalit-Typ ist.

## Claims

1. Process for purifying an inert fluid in the liquid state, containing at least one of the impurities hydrogen (H₂) and carbon monoxide (CO), with respect to at least one of the said impurities, in which:
a) the fluid in the liquid state which is to be purified is passed through at least one bed of particles of at least one adsorbent in order to adsorb at least one of the said impurities H₂ and CO, the adsorption being carried out on a liquid fluid heated to a temperature lower than or equal to its boiling point;
b) a fluid in the liquid state which is substantially purified with respect to at least one of the said impurities H₂ and CO is recovered,
**characterized in that** the adsorbent particles consist of at least one metal supported on at least one support, the metal being chosen from the group formed by platinum (Pt), palladium (Pd), rhodium (Rh) and iridium (Ir), and the support being chosen from the group formed by alumina, silica, zeolites or titanium dioxide (TiO₂).

2. Process according to Claim 1, **characterized in that** the adsorbent particles consist of palladium supported on an alumina-type support.

3. Process according to Claim 2, **characterized in that** the adsorbent particles have a palladium content of from 0.5 to 10% by weight, preferably a content of between 1 and 5%.

4. Process according to one of Claims 1 to 3, **characterized in that** the adsorbent particles are in the form of rods, granules or balls.

5. Process according to one of Claims 1 to 4, **characterized in that** the inert fluid in the liquid state which is to be purified with respect to at least one of its impurities H₂ and CO is chosen from the group formed by liquid nitrogen, liquid argon and liquid helium.

6. Process according to one of Claims 1 to 5, **characterized in that** it comprises a step of passing the inert fluid in the liquid state through at least one bed of particles of at least a second adsorbent for the purpose of adsorbing at least the impurity oxygen (O₂) contained in the said inert gas in the liquid state.

7. Process according to Claim 6, **characterized in that** the step of adsorbing the impurity oxygen on the second adsorbent precedes and/or follows step a) of adsorbing at least one of the impurities H₂ and CO.

8. Process according to either of Claims 6 and 7, **characterized in that** the particles of the second adsorbent selectively adsorb the impurity O₂ contained in the inert fluid in the liquid state which is to be purified.

9. Process according to either of Claims 7 and 8, **characterized in that** the particles of the second adsorbent adsorb the impurity O₂ and at least one of the impurities CO and H₂.

10. Process according to Claim 9, **characterized in that** the second adsorbent is chosen from the group formed by porous metal oxides.

11. Process according to Claim 10, **characterized in that** the second adsorbent is of the hopcalite type.
